# EUROPEAN PATENT SPECIFICATION

(11) **EP 4 092 706 B1**
(45) Date of publication and mention of the grant of the patent: **16.08.2023**
(21) Application number: 22173769.5
(22) Date of filing: 17.05.2022
(51) Int. Cl.: H01H 25/04, B62K 23/02, H01H 25/00, H01H 9/06

(54) **HANDLE SWITCH AND STRADDLED VEHICLE**
GRIFFSCHALTER UND GRÄTSCHSITZFAHRZEUG
COMMUTATEUR DE POIGNÉE ET VÉHICULE À ENFOURCHER

(30) Priority: 19.05.2021 JP 2021084656
(43) Date of publication of application: 23.11.2022
(73) Proprietor: Yamaha Hatsudoki Kabushiki Kaisha, Iwata-shi, Shizuoka 438-8501 (JP)
(72) Inventor: Tachibana, Masumi, Iwata-shi, Shizuoka, 438-8501 (JP)
(74) Representative: Grünecker Patent- und Rechtsanwälte PartG mbB

(56) References cited:
- JP-A- H10 199 374
- JP-A- 2012 048 876
- US-B2- 9 745 014

## Description

The present invention relates to a handle switch and a straddled vehicle.

Handle switches having joysticks have conventionally been used in straddled vehicles such as motorcycles. For example, JP 2018-125266 A discloses such a handle switch. Document US9745014B2 discloses another known handle switch with all the features of the preamble of independent claim 1.

A handle switch is attached to a handlebar and is arranged sideward of a grip. The handle switch is operated with a thumb, etc., of the rider. A joystick is an input device including a stick that can be tilted in a plurality of directions. For example, a stick can be tilted upward, downward, leftward and rightward as viewed from the rider. A joystick allows the rider to make different inputs using a single device. With a handle switch including a joystick, it is possible to reduce the size of the handle switch.

Now, depending on the actual tilt direction of the stick, it may be difficult to determine the intended operation by the rider. For example, when the rider attempts to tilt the stick leftward, the rider may apply a downward force as well as a leftward force on the stick. In this case, the stick is tilted leftward and downward. With the joystick, it may not be possible to accurately detect a leftward operation by the rider. With an motorcycle, or the like, the rider may ride the motorcycle with gloves on during winter, for example. This tends to blunt the feel of the fingertips of the hand with a glove on. Therefore, it may become difficult to notice an operation being performed on the joystick in a direction that is shifted from the intended direction. Therefore, there is a demand for further improving the operability of a handle switch including a joystick.

It is an object of the present invention to provide handle switch configured to be arranged sideward of a grip of a handlebar of a straddled vehicle that can improve the operability of a handle switch including a joystick. According to the present invention said object is solved by a handle switch having the features of independent claim 1. Preferred embodiments are laid down in the dependent claims.

A handle switch disclosed herein is a handle switch including a joystick and arranged sideward of a grip of a handlebar. The joystick includes: a stick having a rod-shaped pin; a substrate arranged so as to intersect with an axial direction of the pin; a first button, a second button and a third button provided on the substrate and arranged in a first direction, a second direction and a third direction, respectively, relative to an axis of the pin as viewed from the axial direction of the pin; and a support case that supports the stick so that the stick can be tilted at least in the first direction, the second direction and the third direction. The stick includes: a tubular portion through which the pin passes, a first leg that extends from the tubular portion in the axial direction of the pin and the first direction; a second leg that extends from the tubular portion in the axial direction of the pin and the second direction; and a third leg that extends from tubular portion in the axial direction of the pin and the third direction. The handle switch is configured so that the first leg pushes the first button when the stick is tilted in the first direction, the second leg pushes the second button when the stick is tilted in the second direction, and the third leg pushes the third button when the stick is tilted in the third direction. The support case is formed with: a pin hole through which the pin is inserted and that has a circumferential central inner circumference; an arc-shaped first inner circumference that is concaved in the first direction as viewed from the axial direction of the pin; an arc-shaped second inner circumference that is concaved in the second direction as viewed from the axial direction of the pin; an arc-shaped third inner circumference that is concaved in the third direction as viewed from the axial direction of the pin; a first slope that extends from the central inner circumference to the first inner circumference and is inclined relative to the axial direction of the pin; a second slope that extends from the central inner circumference to the second inner circumference and is inclined relative to the axial direction of the pin; and a third slope that extends from the central inner circumference to the third inner circumference and is inclined relative to the axial direction of the pin.

With the handle switch described above, the first to third inner circumferences are formed around the pin hole as viewed from the axial direction of the pin (note that the axial direction of the pin refers to the direction in which the axis of the pin extends when the pin is not tilted). The first to third inner circumferences are each formed in an arc-shaped as viewed from the axial direction of the pin. When the pin is tilted, the outer circumference of the pin does not span between and contact multiple inner circumferences. For example, even if a force in a direction that is slightly off the first direction is applied to the stick, the pin is guided in the first direction by the first inner circumference and the first slope, and the stick is tilted in the first direction. Therefore, it is easy for the rider to perform an intended operation. Therefore, with the handle switch described above, it is possible to improve the operability.

The joystick may include: a first slider that is arranged between the first leg of the stick and the first button and supported on the support case so that the first slider can move in the axial direction of the pin; a second slider that is arranged between the second leg of the stick and the second button and supported on the support case so that the second slider can move in the axial direction of the pin; and a third slider that is arranged between the third leg of the stick and the third button and supported on the support case so that the third slider can move in the axial direction of the pin.

Then, when the rider tilts the stick in the first direction, the first leg pushes the first button with the first slider therebetween. When the rider tilts the stick in the second direction, the second leg pushes the second button with the second slider therebetween. When the rider tilts the stick in the third direction, the third leg pushes the third button with the third slider therebetween. Since the first to third sliders are arranged between the stick and the substrate, the first to third buttons can be pushed by the stick even if the distance between the stick and the substrate is relatively long. Since the stick can be arranged relatively far away from the substrate, it is easy for the rider to operate the stick. Therefore, it is possible to improve the operability.

The joystick may include a fourth button that is provided on the substrate and arranged in a fourth direction relative to the axis of the pin as viewed from the axial direction of the pin. The support case may support the stick so that the stick can be tilted in the fourth direction. The stick may include a fourth leg that extends from the tubular portion in the axial direction of the pin and the fourth direction. The joystick may be configured so that the fourth leg pushes the fourth button when the stick is tilted in the fourth direction. The support case may be formed with an arc-shaped fourth inner circumference that is concaved in the fourth direction as viewed from the axial direction of the pin, and a fourth slope that extends from the central inner circumference of the pin hole to the fourth inner circumference and is tilted relative to the axial direction of the pin. As viewed from the axial direction of the pin, the second direction may be a direction that is perpendicular to the first direction, the third direction may be a direction that is opposite from the first direction, and the fourth direction may be a direction that is opposite from the second direction.

The joystick may include: a first slider that is arranged between the first leg of the stick and the first button and supported on the support case so that the first slider can move in the axial direction of the pin; a second slider that is arranged between the second leg of the stick and the second button and supported on the support case so that the second slider can move in the axial direction of the pin; a third slider that is arranged between the third leg of the stick and the third button and supported on the support case so that the third slider can move in the axial direction of the pin; and a fourth slider that is arranged between the fourth leg of the stick and the fourth button and supported on the support case so that the fourth slider can move in the axial direction of the pin.

The joystick may include a central button that is provided on the substrate and arranged on the axis of the pin. The support case may support the stick so that the stick can move in the axial direction of the pin. The joystick may be configured so that the pin pushes the central button when the stick moves in the axial direction of the pin. The support case may include a cylindrical portion that extends in the axial direction of the pin from the central inner circumference of the pin hole away from the first slope, the second slope and the third slope.

Thus, when the rider performs an operation of pushing the stick, even if the stick is pushed in a direction that is slightly inclined from the axial direction of the pin, the pin is guided by the cylindrical portion in the axial direction. Therefore, the stick does not tilt. It is easy for the rider to perform an intended operation. When the rider performs an operation of tilting the stick, the movement in the axial direction of the pin is restricted by the cylindrical portion. Therefore, the stick does not move in the axial direction of the pin. It is easy for the rider to perform an intended operation. Therefore, it is possible to further improve the operability of the handle switch.

The stick may include an operation button that is fixed to the pin and arranged on an opposite side of the tubular portion from the first leg, the second leg and the third leg. A circumferential groove may be formed around the pin of the operation button. The operation button and the tubular portion may be engaged with each other so that the tubular portion can move in the axial direction of the pin in the groove.

Thus, when the operation button is pushed in the axial direction of the pin, the operation button and the pin can move relative to the tubular portion. Therefore, it is possible to prevent the first leg from pushing the first button, the second leg from pushing the second button, and the third leg from pushing the third button when the operation button is pushed in the axial direction of the pin. When it is possible to avoid erroneously determining that an operation of tilting the stick has been performed when the rider performs an operation of pushing the stick.

The support case may include a case body that supports the stick so that the stick can be tilted at least in the first direction, the second direction and the third direction, and a guide member that is formed separately from the case body and assembled onto the case body. The guide member may be formed with the pin hole, the central inner circumference, the first inner circumference, the second inner circumference, the third inner circumference, the first slope, the second slope and the third slope.

By separately forming the guide member and the case body as described above, it is possible to relatively easily machine the pin hole, the central inner circumference, the first to third inner circumferences and the first to third slopes.

The case body may be formed of resin. The pin and the guide member may be formed of metal.

As the case body is made of resin, it is possible to reduce the weight of the joystick. As the pin and the guide member, which come into contact with each other when operating, are made of metal, it is possible to improve the durability of the joystick.

The pin may include a first end portion and a second end portion that is located closer to the substrate than the first end portion. The pin may be inclined relative to a plane perpendicular to an axis of the grip so that the first end portion is located closer to the grip than the second end portion.

Thus, since the stick is inclined toward the grip, it is easy for the rider to operate the stick with the thumb while holding the grip.

The handle switch may include a button that is arranged closer to the grip than the stick.

Thus, since the button is arranged closer to the grip, the joystick is unlikely to interfere when the rider operates the button.

The stick may be provided on a lower half of the handle switch.

Thus, it is easy for the rider to operate the stick with the thumb while holding the grip.

The handle switch may include: a turn switch used for operating a direction indicator; and a horn button used for operating a horn. An outer end of the joystick in a radial direction of the grip may be located outward of the turn switch and the horn button in the radial direction of the grip.

Thus, when the rider operates the joystick with a finger, the finger of the rider is unlikely to hit the turn switch and the horn button. Therefore, the rider is unlikely to erroneously operate the turn switch or the horn button.

A straddled vehicle disclosed herein includes the handle switch described above.

The straddled vehicle may include an accelerator grip that can be turned and is arranged at a right end portion of the handlebar. The grip may be a fixed grip that cannot be turned and is arranged at a left end portion of the handlebar. The handle switch may be arranged rightward of the fixed grip.

### Advantageous Effects Of Invention

According to the present invention, it is possible to improve the operability of a handle switch including a joystick.

### BRIEF DESCRIPTION OF THE DRAWINGS

FIG. 1 is a left side view of a motorcycle according to an embodiment.
FIG. 2 is a plan view of the motorcycle.
FIG. 3 is a view of a left grip and a left handle switch as viewed from the rear side of the vehicle.
FIG. 4 is a perspective view of the left handle switch.
FIG. 5 is a view of the left handle switch as viewed from the left side.
FIG. 6 is a cross-sectional view of a joystick when the stick is in the initial position.
FIG. 7 is a perspective view of a lever.
FIG. 8 is a view of a support case as viewed from the rear side of the vehicle along the axial direction of the pin.
FIG. 9 is a view of a guide member as viewed from the rear side of the vehicle along the axial direction of the pin.
FIG. 10 is an enlarged cross-sectional view of the pin and the guide member.
FIG. 11 is a view of the substrate as viewed from the rear side of the vehicle along the axial direction of the pin.
FIG. 12 is a cross-sectional view of the joystick when the stick is tilted leftward.
FIG. 13 is a cross-sectional view of the joystick when the stick is pushed down.

### DETAILED DESCRIPTION OF THE PREFERRED EMBODIMENTS

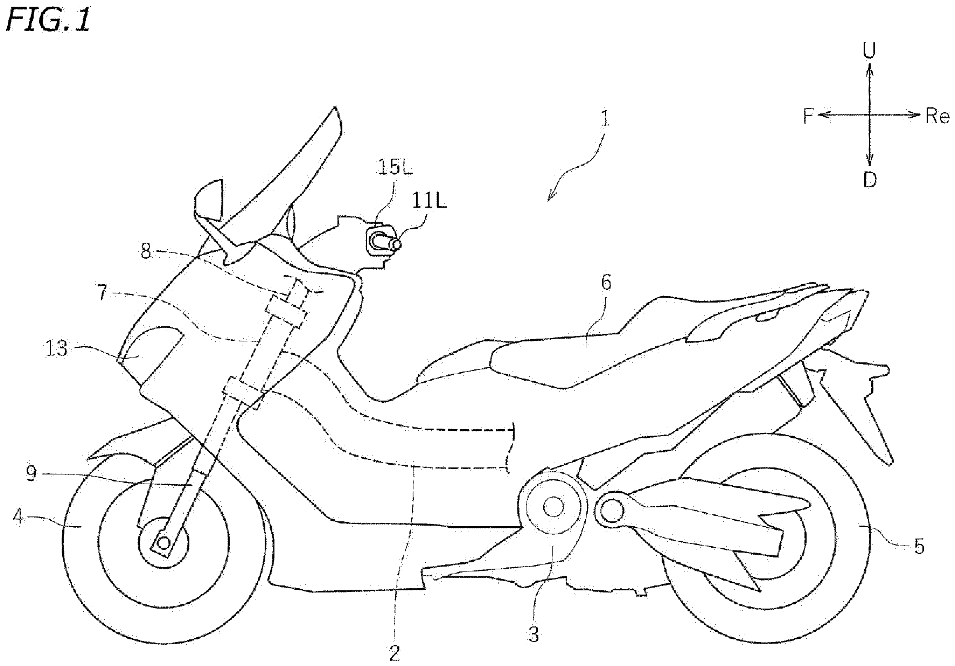

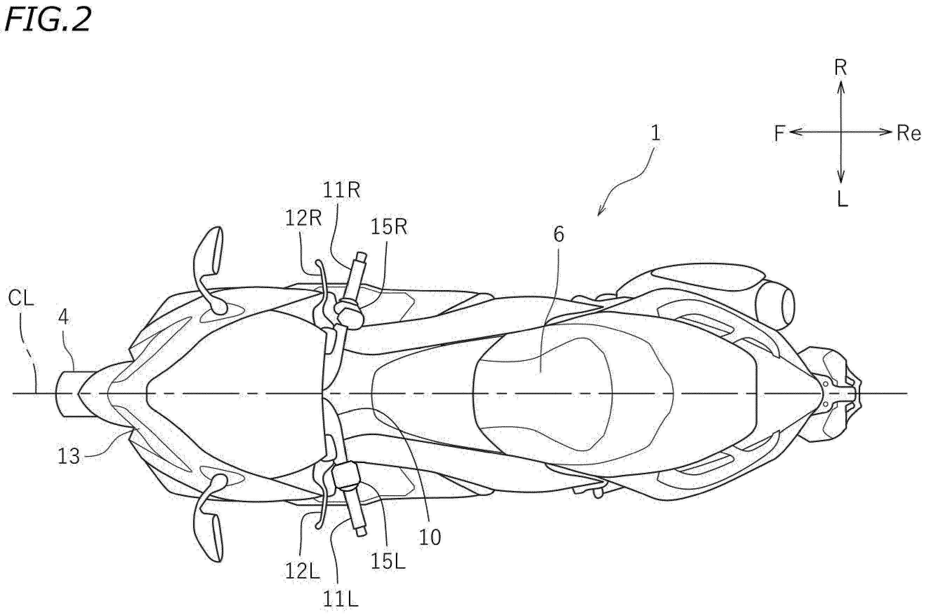

An embodiment will now be described with reference to the drawings. FIG. 1 is a left side view of a motorcycle 1, which is an example of the straddled vehicle. FIG. 2 is a plan view of the motorcycle 1. The motorcycle 1 according to the present embodiment is a scooter. Note however that the type of the motorcycle 1 is not limited to a scooter. There is no limitation on the type of the motorcycle 1.

The motorcycle 1 includes a vehicle frame 2, a drive source 3 supported on the vehicle frame 2, a front wheel 4, a rear wheel 5 driven by the drive source 3, and a seat 6 supported on the vehicle frame 2. The drive source 3 is a unit for generating the driving power for the motorcycle 1. Here, the drive source 3 is an internal combustion engine. Note however that the drive source 3 may be an electric motor. The drive source 3 is linked to the rear wheel 5. The rear wheel 5 is driven by the drive source 3.

The terms front, rear, left, right, up and down, as used in the description below, refer to these directions as seen from a virtual rider (not shown) seated on the seat 6 while the motorcycle 1 is standing upright on a horizontal surface with no rider and no load thereon, unless specified otherwise. The designations F, Re, L, R, U and D, as used in the figures, refer to front, rear, left, right, up and down, respectively.

The term "forward" refers not only to the direction that extends horizontally forward along the vehicle center line CL (see FIG. 2), but also to directions that are inclined from that direction by an angle that is less than 90 degrees. The term "rearward" refers not only to the direction that extends horizontally rearward along the vehicle center line CL, but also to directions that are inclined from that direction by an angle that is less than 90 degrees. The term "leftward" refers not only to the direction that extends leftward along a horizontal line perpendicular to the vehicle center line CL, but also to directions that are inclined from that direction by an angle that is less than 90 degrees. The term "rightward" refers not only to the direction that extends rightward along a horizontal line perpendicular to the vehicle center line CL, but also to directions that are inclined from that direction by an angle that is less than 90 degrees. The term "upward" refers not only to the direction that extends upward along the vertical line, but also to directions that are inclined from that direction by an angle that is less than 90 degrees. The term "downward" refers not only to the direction that extends downward along the vertical line, but also to directions that are inclined from that direction by an angle that is less than 90 degrees.

The vehicle frame 2 includes a head pipe 7. A steering shaft 8 is supported on the head pipe 7 so that the steering shaft 8 can rotate left and right. A lower portion of the steering shaft 8 is connected to a front fork 9. The front fork 9 rotatably supports the front wheel 4. A handlebar 10 is fixed to an upper portion of the steering shaft 8.

As shown in FIG. 2, the handlebar 10 extends leftward and rightward. A left grip 11L is attached to the left end of the handlebar 10. A right grip 11R is attached to the right end of the handlebar 10. The left grip 11L is a fixed grip that cannot be turned. The right grip 11R is an accelerator grip that can be turned. By turning the right grip 11R, the output power of the drive source 3 can be adjusted.

A left lever 12L is arranged forward of the left grip 11L. The right lever 12R is arranged forward of the right grip 11R. Note that the left lever 12L and the right lever 12R are not shown in FIG. 1. By operating the left lever 12L, the brake (not shown) of the rear wheel 5 can be actuated. By operating the right lever 12R, the brake (not shown) of the front wheel 4 can be actuated.

The handlebar 10 is equipped with a left handle switch 15L arranged sideward of the left grip 11L and a right handle switch 15R arranged sideward of the right grip 11R. Note that the left handle switch 15L and the right handle switch 15R are simplified in FIG. 1 and FIG. 2. The left handle switch 15L is arranged rightward of the left grip 11L. The right handle switch 15R is arranged leftward of the right grip 11R. In the description below, the left handle switch 15L will be referred to simply as the handle switch 15L.

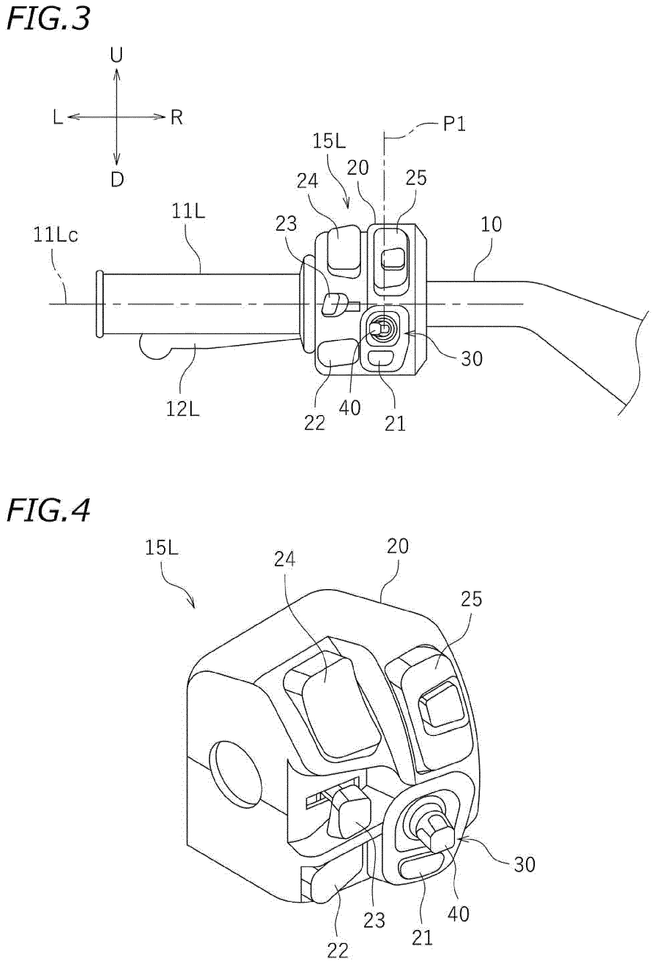

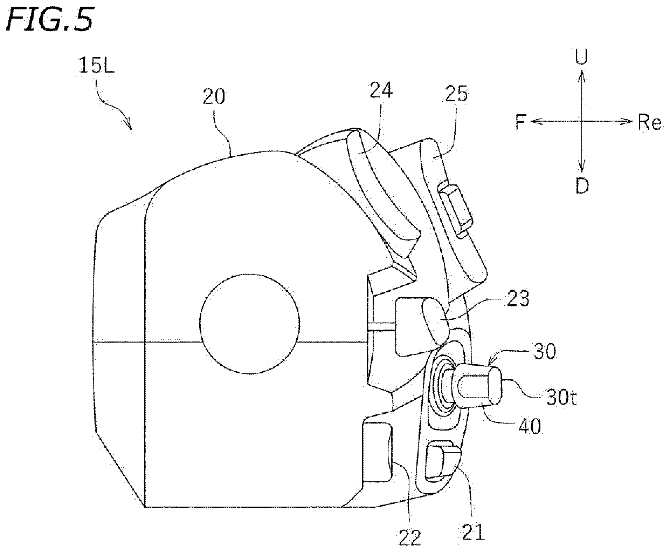

FIG. 3 is a view of the left grip 11L and the handle switch 15L as viewed from the rear side of the vehicle. FIG. 4 is a perspective view of the handle switch 15L. FIG. 5 is a view of the handle switch 15L as viewed from the left side. As shown in FIG. 4, the handle switch 15L includes a handle switch case 20 that is attached to the handlebar 10. The handle switch case 20 is provided with a joystick 30, an input button 21, a horn button 22, a turn switch 23, a headlight switch 24, and a setting switch 25.

The horn button 22 is a button for operating the horn (not shown). The turn switch 23 is a switch used for operating a direction indicator (not shown). The turn switch 23 is a button that can be slid leftward and rightward. The headlight switch 24 is a switch used for operating a headlight 13 (see FIG. 1). The setting switch 25 is a switch used for cruise control settings, etc.

The joystick 30 allows the rider to make different inputs using a single device. Here, the joystick 30 allows for five inputs. There is no particular limitation on the operations of the joystick 30. For example, the joystick 30 can be used to operate a navigation system, operate a music player, switch between various screens, raise and lower a motorized screen (not shown), and make various settings. Next, the configuration of the joystick 30 will be described.

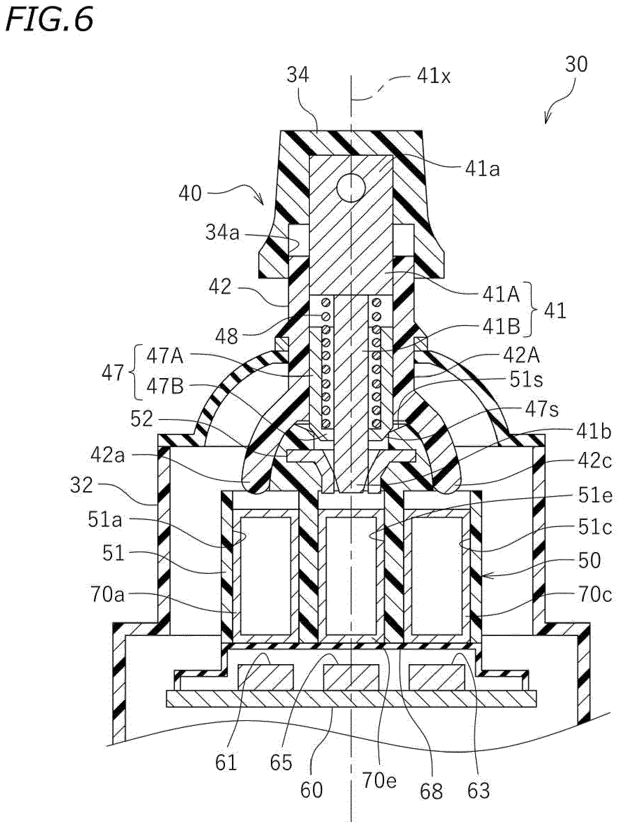

FIG. 6 is a cross-sectional view of the joystick 30. The joystick 30 includes a joystick case 32, a stick 40, a support case 50, first to fifth sliders 70a to 70e and a substrate 60.

The stick 40 includes an operation button 34, a rod-shaped pin 41, a lever 42, a slider 47 and a spring 48. FIG. 6 is a cross-sectional view including the axis 41x of the pin 41. As will be described later, the stick 40 is tiltable. In this specification, the direction in which the axis 41x of the pin 41 extends when the stick 40 is not tilted and any direction parallel to this direction will be referred to as "the axial direction of the pin".

The thickness of the pin 41 may or may not be constant. In the present embodiment, the pin 41 includes a large diameter portion 41A and a small diameter portion 41B that is smaller than the large diameter portion 41A. The pin 41 includes a first end portion 41a and a second end portion 41b that is located more toward the substrate 60 than the first end portion 41a. Although there is no particular limitation on the material of the pin 41, it is metal in the present embodiment. The pin 41 can be formed, for example, by stainless steel, aluminum, or the like.

The first end portion 41a of the pin 41 is inserted into the operation button 34. The large diameter portion 41A of the pin 41 is inserted into the operation button 34. The operation button 34 is fixed to the pin 41. The operation button 34 is formed in a cylindrical shape with a top plate. A circumferential groove 34a is formed around the pin 41 of the operation button 34.

The lever 42 has a tubular portion 42A through which the pin 41 passes through. A portion of the tubular portion 42A is inserted into the groove 34a of the operation button 34. The pin 41 is slidably supported in the tubular portion 42A. The operation button 34 and the pin 41 are movable relative to the lever 42 in the axial direction of the pin. The operation button 34 and the tubular portion 42A are engaged together so that the tubular portion 42A can move in the groove 34a in the axial direction of the pin. On the other hand, the operation button 34 and the pin 41 are not movable leftward, upward, rightward and downward relative to the lever 42. The control button 34, the pin 41 and the lever 42 move together leftward, upward, rightward and downward.

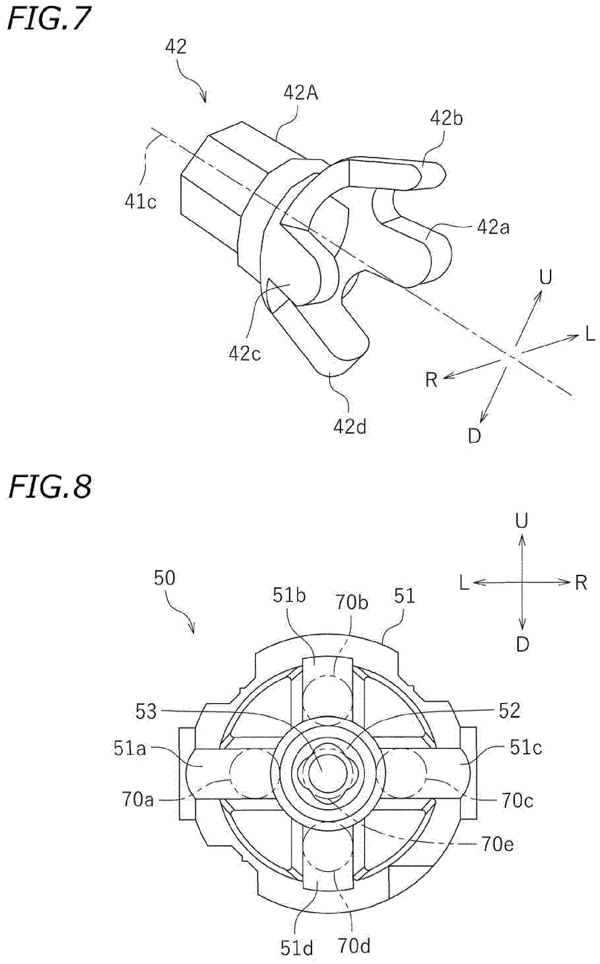

FIG. 7 is a perspective view of the lever 42. The lever 42 includes a first leg 42a that extends in the axial direction of the pin and leftward from the tubular portion 42A, a second leg 42b that extends in the axial direction of the pin and upward from the tubular portion 42A, a third leg 42c that extends in the axial direction of the pin and rightward from the tubular portion 42A, and a fourth leg 42d that extends in the axial direction of the pin and downward from the tubular portion 42A.

As shown in FIG. 6, the support case 50 supports the stick 40 so that it can be moved in the axial direction of the pin and can be tilted leftward, upward, rightward and downward. FIG. 8 is a view of the support case 50 as viewed from the rear side of the vehicle along the axial direction of the pin. The support case 50 includes a case body 51 and a guide member 52. The case body 51 is formed of resin. For example, the case body 51 is made of a synthetic resin such as PP, PE and ABS. The guide member 52 is formed of metal. For example, the guide member 52 is formed of stainless steel, aluminum, or the like.

The case body 51 has a central hole 51e, a first hole 51a, a second hole 51b, a third hole 51c and a fourth hole 51d, each extending in the axial direction of the pin. The first hole 51a is formed leftward of the central hole 51e. The second hole 51b is formed above the central hole 51e. The third hole 51c is formed rightward of the central hole 51e. The fourth hole 51d is formed below the central hole 51e.

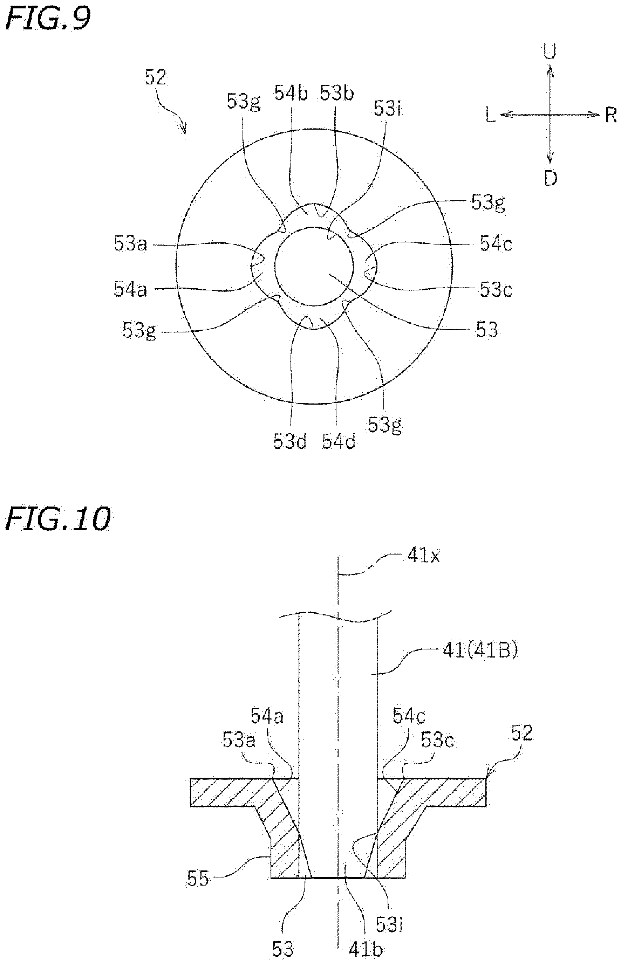

The guide member 52 is a member that guides the movement and tilting of the pin 41. The guide member 52 is formed separately from the case body 51 and is assembled to the case body 51. FIG. 9 is a view of the guide member 52 as viewed from the rear side of the vehicle along the axial direction of the pin. FIG. 10 is an enlarged cross-sectional view of the pin 41 and guide member 52. The guide member 52 is formed with a pin hole 53 into which the pin 41 is inserted.

As viewed from the axial direction of the pin, as shown in FIG. 9, the pin hole 53 has a circumferential central inner circumference 53i. As viewed from the axial direction of the pin, the guide member 52 includes an arc-shaped first inner circumference 53a that is concaved leftward, an arc-shaped second inner circumference 53b that is concaved upward, an arc-shaped third inner circumference 53c that is concaved rightward, and an arc-shaped fourth inner circumference 53d that is concaved downward. As viewed from the axial direction of the pin, a step 53g is formed between the first inner circumference 53a and the second inner circumference 53b, between the second inner circumference 53b and the third inner circumference 53c, between the third inner circumference 53c and the fourth inner circumference 53d, and between the fourth inner circumference 53d and the first inner circumference 53a.

The guide member 52 includes a first slope 54a that extends from the central inner circumference 53i to the first inner circumference 53a, a second slope 54b that extends from the central inner circumference 53i to the second inner circumference 53b, a third slope 54c that extends from the central inner circumference 53i to the third inner circumference 53c, a fourth slope 54d that extends from the central inner circumference 53i to the fourth inner circumference 53d. The first slope 54a, the second slope 54b, the third slope 54c and the fourth slope 54d are inclined relative to the axial direction of the pin (see FIG. 10).

As shown in FIG. 10, the second end portion 41b of the pin 41 is tapered. The second end portion 41b of the pin 41 is formed in a tapered shape. The second end portion 41b is inserted into the pin hole 53.

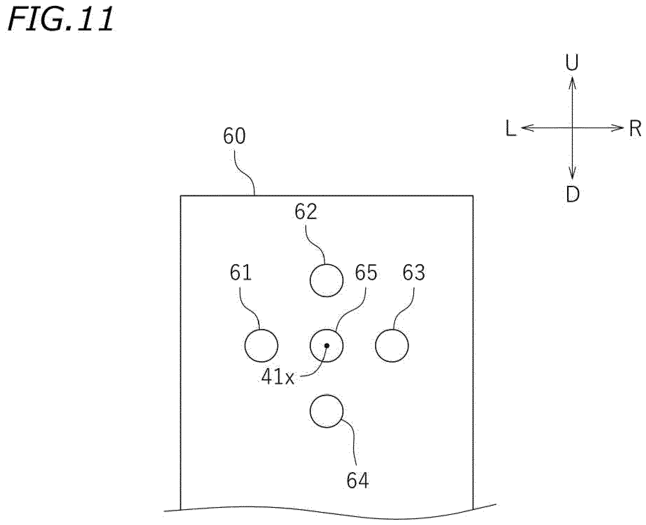

FIG. 11 shows a view of the substrate 60 as viewed from the rear side of the vehicle along the axial direction of the pin. As shown in FIG. 11, the substrate 60 is provided with a first button 61, a second button 62, a third button 63, a fourth button 64 and a central button 65. The first button 61, the second button 62, the third button 63, the fourth button 64 and the central button 65 are so-called tact switches, which are switches that are pushed to make an input. The central button 65 is arranged on the axis 41x of the pin 41 when the pin 41 is not tilted. The first button 61, the second button 62, the third button 63 and the fourth button 64 are arranged leftward, upward, rightward and downward, respectively, relative to the axis 41x of the pin 41 when the pin 41 is not tilted. Note that leftward, upward, rightward and downward are examples of the "first direction", the "second direction", the "third direction" and the "fourth direction", respectively.

As shown in FIG. 6, the first button 61, the second button 62, the third button 63, the fourth button 64 and the central button 65 of the substrate 60 are covered by an elastically deformable cover 68. The cover 68 is a dustproof member that prevents moisture, dust, etc., from adhering to the substrate 60. The cover 68 is arranged between the substrate 60 and the stick 40. Although there is no particular limitation on the material of the cover 68, a rubber, or the like, can suitably be used. Here, the material of the cover 68 is silicone. The cover 68 is elastic. The cover 68 deforms with a force applied thereto, but it restores its original shape when the force is removed.

As shown in FIG. 6, a center slider 70e, a first slider 70a, a second slider 70b, a third slider 70c and a fourth slider 70d are inserted into the central hole 51e, the first hole 51a, the second hole 51b, the third hole 51c and the fourth hole 51d of the case body 51, respectively. There is no particular limitation on the shape of the center slider 70e, the first slider 70a, the second slider 70b, the third slider 70c and the fourth slider 70d. For example, the center slider 70e, the first slider 70a, the second slider 70b, the third slider 70c and the fourth slider 70d may be rod-shaped, or may be formed in a cylindrical shape with closed ends.

The first slider 70a is arranged between the first leg 42a of the lever 42 and the first button 61. The second slider 70b is arranged between the second leg 42b of the lever 42 and the second button 62. The third slider 70c is arranged between the third leg 42c of the lever 42 and the third button 63. The fourth slider 70d is arranged between the fourth leg 42d of the lever 42 and the fourth button 64. The center slider 70e is arranged between the pin 41 and the central button 65. Here, the substrate 60 is covered by the cover 68. Therefore, the first slider 70a is arranged between the first leg 42a of the lever 42 and the cover 68. The second slider 70b is arranged between the second leg 42b of the lever 42 and the cover 68. The third slider 70c is arranged between the third leg 42c of the lever 42 and the cover 68. The fourth slider 70d is arranged between the fourth leg 42d of the lever 42 and the cover 68. The center slider 70e is arranged between the pin 41 and the cover 68. The first slider 70a, the second slider 70b, the third slider 70c, the fourth slider 70d and the center slider 70e are supported by the support case 50 so that they can move in the axial direction of the pin.

As shown in FIG. 6, the slider 47 includes a cylindrical portion 47A and a disc portion 47B. The small diameter portion 41B of the pin 41 passes through the cylindrical portion 47A and the disc portion 47B. The case body 51 has a hole in which the small diameter portion 41B of the pin 41 is inserted. A slope 51s inclined relative to the axis 41x of the pin 41 is formed on the inner circumference of the hole in the case body 51. The slope 51s extends upward and outward in the radial direction of the pin 41 in FIG. 6. A slope 47s is formed on the lower surface of the disc portion 47B of the slider 47 in FIG. 6. The slope 47s extends upward and outward in the radial direction of the pin 41 in FIG. 6. The spring 48 is provided between the large diameter portion 41A of the pin 41 and the disc portion 47B of the slider 47. The spring 48 is a coil spring. One end of the spring 48 is in contact with the large diameter portion 41A of the pin 41, and the other end is in contact with the disc portion 47B of the slider 47. The spring 48 biases the stick 40 toward the initial position. FIG. 6 shows the state where the stick 40 is in the initial position. When the stick 40 is in the initial position, the first leg 42a is spaced apart from the first slider 70a, the second leg 42b is spaced apart from the second slider 70b, the third leg 42c is spaced apart from the third slider 70c, the fourth leg 42d is spaced apart from the fourth slider 70d, and the pin 41 is spaced apart from the central slider 70e.

As shown in FIG. 3, the stick 40 is inclined leftward. The stick 40 is inclined toward the left grip 11L. Specifically, when the pin 41 is not inclined from the axial direction of the pin, the pin 41 of the stick 40 is inclined relative to the plane P1 perpendicular to the axis 11Lc of the left grip 11L so that the first end portion 41a is located closer to the left grip 11L than the second end portion 41b.

As shown in FIG. 5, the tip 30t of the joystick 30 is located rearward of the turn switch 23 and the horn button 22 as viewed from the direction of the axis 11 Lc of the left grip 11L. The tip 30t of the joystick 30 is the outer end of the joystick 30 in the radial direction of the left grip 11L. The outer end 30t of the joystick 30 in the radial direction of the left grip 11L is located outward of the turn switch 23 and the horn button 22 in the radial direction of the left grip 11L.

The handle switch 15L is configured as described above. Next, the operation of the joystick 30 will be described.

The joystick 30 allows for an operation of tilting the stick 40 leftward, an operation of tilting the stick 40 upward, an operation of tilting the stick 40 rightward, an operation of tilting the stick 40 downward, and an operation of pushing the stick 40 in the axial direction of the pin. Five operations can be performed on the joystick 30.

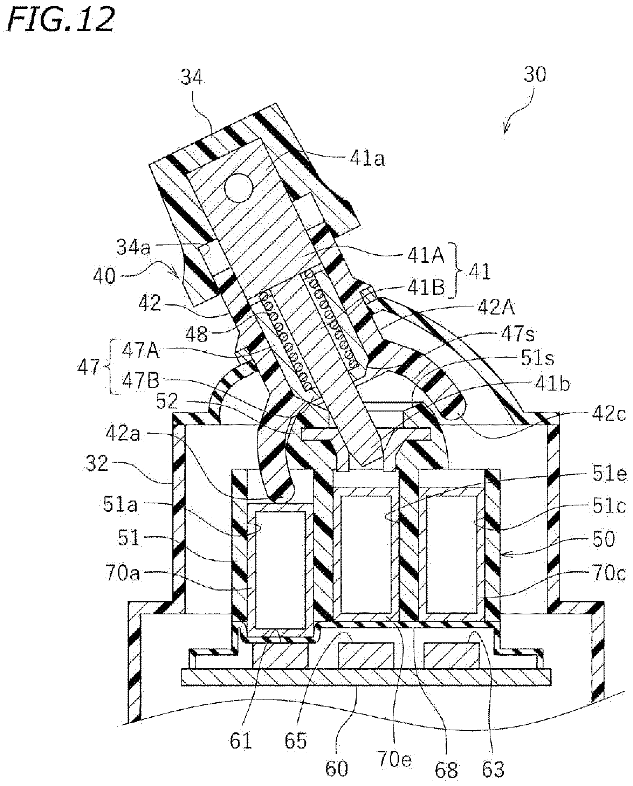

As shown in FIG. 12, when the stick 40 is tilted leftward, the first slider 70a is pushed by the first leg 42a. The first slider 70a moves toward the first button 61, and pushes the first button 61 with the cover 68 therebetween. Thus, tilting the stick 40 leftward inputs the first button 61.

Similarly, when the stick 40 is tilted upward, the second slider 70b is pushed by the second leg 42b. The second slider 70b moves toward the second button 62, and pushes the second button 62 with the cover 68 therebetween. Thus, tilting the stick 40 upward inputs the second button 62.

When the stick 40 is tilted rightward, the third slider 70c is pushed by the third leg 42c. The third slider 70c moves toward the third button 63, and pushes the third button 63 with the cover 68 therebetween. Thus, tilting the stick 40 rightward inputs the third button 63.

When the stick 40 is tilted downward, the fourth slider 70d is pushed by the fourth leg 42d. The fourth slider 70d moves toward the fourth button 64, and pushes the fourth button 64 with the cover 68 therebetween. Thus, tilting the stick 40 downward inputs the fourth button 64.

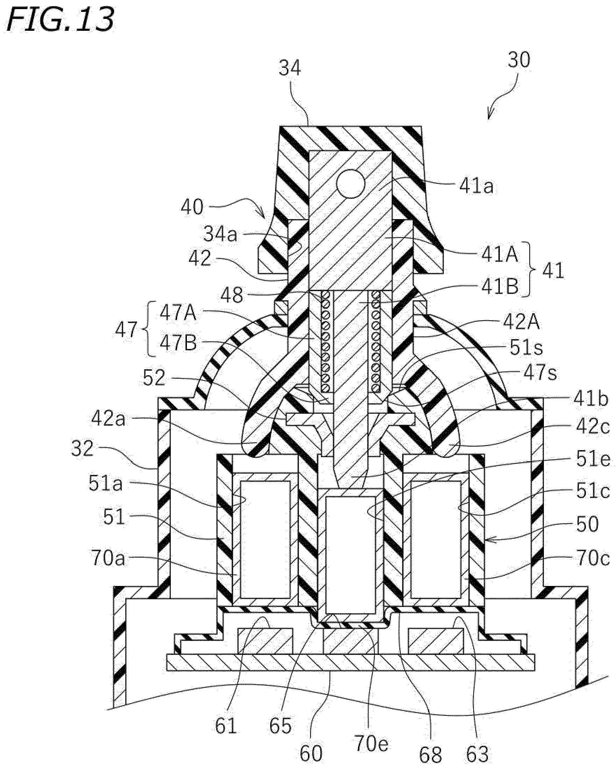

As shown in FIG. 13, when the stick 40 is pushed, the operation button 34 and the pin 41 slide against the lever 42, and the central slider 70e is pushed by the pin 41. The central slider 70e moves toward the central button 65 and pushes the central button 65 with the cover 68 therebetween. Thus, pushing the stick 40 inputs the fifth button 65.

Now, for example, the rider may apply a slight upward force as well as a leftward force to the stick 40, even though the rider intends to tilt the stick 40 leftward. This tends to happen when the rider is wearing gloves. In this case, if the stick 40 tilts leftward and upward, the input of the first button 61 may not be detected properly. However, according to the present embodiment, the support case 50 includes the arc-shaped first inner circumference 53a that is concaved leftward (see FIG. 9) as viewed from the axial direction of the pin, and the first slope 54a that extends from the central inner circumference 53i to the first inner circumference 53a (see FIG. 10). The step 53g is provided at the end of the first inner circumference 53a. Therefore, even if a slight upward force is applied to the stick 40 in addition to the leftward force, the outer circumference of the pin 41 will not span between and contact both of the first slope 54a and the second slope 54b. The pin 41 is guided leftward by the first inner circumference 53a and the first slope 54a. Therefore, the pin 41 tilts leftward, and the input of the first button 61 is detected properly. Note that although the description is omitted, the inputs of the second button 62, the third button 63 and the fourth button 64 are similarly detected properly when the rider tilts the stick 40 upward, rightward and downward, respectively. The rider can perform an intended operation even if the stick 40 is tilted in a direction that is slightly off the intended direction.

For example, when the stick 40 is tilted leftward, the upward or downward movement of the stick 40 is restricted by the first inner circumference 53a and the first slope 54a. Even if the rider applies an upward or downward force after tilting the stick 40 leftward, it is possible to prevent the stick 40 from tilting upward or downward. It is possible to prevent the second button 62 or the fourth button 64 from being input while the first button 61 is being input. Thus, it is possible to prevent an erroneous operation after the stick 40 is tilted.

When the rider intends to push the stick 40, the rider may apply to the stick 40 not only a force in the axial direction of the pin, but also a slight force in a direction that is tilted from the axial direction of the pin. In this case, if the stick 40 tilts slightly while moving in the axial direction of the pin, the input of the fifth button 65 may not be detected properly. However, according to the present embodiment, the support case 50 has a cylindrical portion 55 extending in the axial direction of the pin from the central inner circumference 53i (see FIG. 10). Therefore, when the stick 40 moves in the axial direction of the pin, the pin 41 is prevented by the cylindrical portion 55 from tilting. Therefore, the stick 40 moves straight in the axial direction of the pin, and the input of the fifth button 65 is detected properly. Thus, the rider can perform an intended operation even if, when pushing the stick 40, the rider applies not only a force in the axial direction of the pin, but also a slight force in a direction that is tilted from the axis of the pin.

When the second end portion 41b of the pin 41 is inserted into the cylindrical portion 55, the tilt of the pin 41 is restricted by the cylindrical portion 55. Even if a force in a direction that is tilted from the axis direction of the pin is applied to the stick 40 after the rider pushes the stick 40, it is possible to prevent the stick 40 from tilting. It is possible to prevent the first button 61, etc., from being input while the fifth button 65 is being input. Thus, it is possible to prevent an erroneous operation after the stick 40 is pushed.

For example, the rider may apply not only a leftward force to the stick 40, but also a slight pushing force to the stick 40, even though the rider intends to tilt the stick 40 leftward. In this case, if the stick 40 tilts and also moves in the axial direction of the pin, the input of the first button 61 may not be detected properly. However, according to the present embodiment, since the support case 50 has the cylindrical portion 55, when the stick 40 is tilted, the movement of the stick 40 in the axial direction of the pin is restricted. Therefore, the input of the first button 61 is detected properly. This similarly applies when the rider intends to tilt the stick 40 upward, rightward or downward. Thus, the rider can perform an intended operation even if, when the rider attempts to tilt the stick 40, the rider slightly pushes the stick 40 while tilting the stick 40. Even if a force in the axial direction of the pin is applied to the stick 40 after the stick 40 is tilted, it is possible to prevent the stick 40 from moving in the axial direction of the pin. For example, It is possible to prevent the fifth button 65 from being input while the first button 61 is being input. Thus, it is possible to prevent an erroneous operation after the stick 40 is tilted.

As described above, with the handle switch 15L according to the present embodiment, even if the rider applies a force in a direction that is slightly off the intended direction when the rider tilts the stick 40, the stick 40 will tilt in the intended direction due to the pin 41 being guided by the guide member 52. Therefore, the joystick 30 is unlikely to erroneously detect an operation by the rider. It is easy for the rider to perform an intended operation. Therefore, with the handle switch 15L, it is possible to improve the operability.

With the handle switch 15L according to the present embodiment, the first slider 70a is arranged between the first leg 42a of the stick 40 and the first button 61, the second slider 70b is arranged between the second leg 42b and the second button 62, the third slider 70c is arranged between the third leg 42c and the third button 63, and the fourth slider 70d is arranged between the fourth leg 42d and the fourth button 64, as shown in FIG. 6. Therefore, it is possible to increase the distance between the stick 40 and the substrate 60. The stick 40 can be arranged more rearward. Therefore, it is easy for the rider to operate the stick 40. It is possible to further improve the operability of the handle switch 15L.

With the handle switch 15L according to the present embodiment, the support case 50 includes the cylindrical portion 55 that extends in the axial direction of the pin from the central inner circumference 53i of the pin hole 53 (see FIG. 10). Even if the stick 40 is pushed in a direction slightly tilted from the axial direction of the pin, the stick 40 will not tilt as the pin 41 is guided in the axial direction of the pin by the cylindrical portion 55. Therefore, the joystick 30 is unlikely to erroneously detect an operation of pushing the stick 40 by the rider. When the stick 40 is tilted and also pushed slightly, the cylindrical part 55 prevents the stick 40 from moving in the axial direction of the pin. Therefore, the joystick 30 is unlikely to erroneously detect an operation of tilting the stick 40 by the rider. Therefore, it is easy for the rider to perform an intended operation.

With the handle switch 15L according to the present embodiment, the operation button 34 of the stick 40 and the tubular portion 42A are engaged with each other so that the tubular portion 42A can move in the axial direction of the pin in the groove 34a of the operation button 34. When the operation button 34 is pushed, the operation button 34 and the pin 41 can move relative to the tubular portion 42A. Therefore, when the operation button 34 is pushed, it is possible to more reliably prevent the first leg 42a from pushing the first button 61 with the first slider 70a therebetween, the second leg 42b from pushing the second button 62 with the second slider 70b therebetween, the third leg 42c from pushing the third button 63 with the third slider 70c therebetween, and the fourth leg 42d from pushing the fourth button 64 with the fourth slider 70d therebetween. The joystick 30 is unlikely to erroneously detect an operation of pushing the stick 40 by the rider. Therefore, it is easy for the rider to perform an intended operation.

With the handle switch 15L according to the present embodiment, the guide member 52 is formed with the pin hole 53, the first inner circumference 53a, the second inner circumference 53b, the third inner circumference 53c, the fourth inner circumference 53d, the first slope 54a, the second slope 54b, the third slope 54c, the fourth slope 54d and the cylindrical portion 55. The guide member 52 is separate from the case body 51. The case body 51 and the guide member 52 are produced separately from each other and then assembled together. According to the present embodiment, it is possible to relatively easily machine the pin hole 53, the first inner circumference 53a, the second inner circumference 53b, the third inner circumference 53c, the fourth inner circumference 53d, the first slope 54a, the second slope 54b, the third slope 54c, the fourth slope 54d and the cylindrical portion 55.

The case body 51 is formed of resin. Therefore, it is possible to reduce the weight of the joystick 30. The pin 41 and the guide member 52 are formed of metal. Therefore, it is possible to improve the durability of the joystick 30.

As shown in FIG. 3, the stick 40 is tilted leftward when it is in its initial position. Therefore, it is easy for the rider to operate the stick 40 with the thumb of the left hand while holding the left grip 11L with the left hand.

The horn button 22, the turn switch 23 and the headlight switch 24 are arranged leftward relative to the stick 40. The horn button 22, the turn switch 23 and the headlight switch 24 are arranged closer to the left grip 11L than the stick 40. Therefore, when the rider operates the horn button 22, the turn switch 23 and the headlight switch 24, the joystick 30 is unlikely to interfere. It is easy for the rider to operate the horn button 22, the turn switch 23 and the headlight switch 24.

As shown in FIG. 3, the stick 40 is provided on the lower half of the handle switch 15L. Therefore, it is easy for the rider to operate the stick 40 with the thumb of the left hand while holding the left grip 11L with the left hand.

As shown in FIG. 5, the outer end 30t of the joystick 30 in the radial direction of the left grip 11L is located outward relative to the turn switch 23 and the horn button 22 in the radial direction of the left grip 11L. The joystick 30 is arranged rearward relative to the turn switch 23 and the horn button 22. Therefore, the rider is unlikely to touch the turn switch 23 and the horn button 22 while operating the joystick 30. The rider is unlikely to erroneously operate the turn switch 23 and the horn button 22 when operating the joystick 30.

While one embodiment has been described above, the aforementioned embodiment is merely an example. Various other embodiments are possible. Examples of other embodiments will now be described briefly.

Although the stick 40 can be tilted in four directions in the embodiment described above, the number of directions in which the stick 40 can be tilted may be three. The number of directions in which the stick 40 can be tilted may be five or more. The directions in which the stick 40 is tilted is not limited to leftward, upward, rightward and downward.

In the embodiment described above, the joystick 30 allows for an operation of tilting the stick 40 leftward, an operation of tilting the stick 40 upward, an operation of tilting the stick 40 rightward, an operation of tilting the stick 40 downward, and an operation of pushing the stick 40. Five inputs can be made with the joystick 30. It may be additionally possible to perform an operation of long-pressing the stick 40. That is, the joystick 30 may detect different inputs when the amount of time for which the fifth button 65 is pressed is less than a predetermined amount of time and when it is equal to or greater than the predetermined amount of time. Then, six inputs can be made with the joystick 30.

The first to fourth sliders 70a to 70d and the center slider 70e may be optional. The first to fourth legs 42a to 42d of the stick 40 may be configured so that the first to fourth buttons 61 to 64 can be pushed by directly pushing the cover 68. The pin 41 may be configured so as to push the central button 65 by directly pushing the cover 68.

The cover 68 may be optional. The first to fifth sliders 70a to 70e may be configured to directly push the first to fifth buttons 61 to 65, respectively. The cover 68, the first to fourth sliders 70a to 70d and the center slider 70e may be optional. The first to fourth legs 42a to 42d and the pin 41 of the stick 40 may be configured so as to directly push the first to fifth buttons 61 to 65, respectively.

The material of the case body 51 of the support case 50 is not limited to resin. The case body 51 may be formed of metal, for example. The material of the guide member 52 is not limited to metal. The case body 51 and the guide member 52 do not need to be separate from each other. The case body 51 and the guide member 52 may be integral.

The stick 40 need not be tilted leftward when it is in the initial position. When the stick 40 is in the initial position, the axis 41x of the pin 41 may be in the plane P1 perpendicular to the axis 11Lc of the left grip 11L. The stick 40 may be tilted rightward when in the initial position.

The handle switch 15L may or may not be provided with a switch other than the joystick 30. The buttons provided on the handle switch 15L may be located rightward relative to the stick 40 of the joystick 30. There is no particular limitation on the positions of the buttons provided on the handle switch 15L. There is no particular limitation on the position of the joystick 30. The stick 40 does not need to be provided on the lower half of the handle switch 15L. For example, the stick 40 may be provided on the upper half of the handle switch 15L.

The outer end 30t of the joystick 30 in the radial direction of the left grip 11L does not need to be located outward relative to the turn switch 23 and the horn button 22 in the radial direction of the left grip 11L.

The joystick 30 may be provided on the right handle switch 15R. The joystick 30 may be arranged leftward of the right grip 11R.

A straddled vehicle refers to a vehicle that is straddled by the rider. The straddled vehicle is not limited to the motorcycle 1. The straddled vehicle may be an auto tricycle, an ATV (All Terrain Vehicle), or a snowmobile, for example. The handle switch 15L described above is applicable to any vehicle having a handlebar.

### Reference Signs List

1: Motorcycle (straddled vehicle), 10: Handlebar, 11L: Left grip (grip, fixed grip), 11R: Right grip (accelerator grip), 15L: Left handle switch (handle switch), 22: Horn button, 23: Turn switch, 24: Headlight button (button), 30: Joystick, 34: Operation button, 34a: Groove, 40: Stick, 41: Pin, 41a: First end portion, 41b: Second end portion, 42: Lever, 42A: Cylindrical portion, 42a: First leg, 42b: Second leg, 42c: Third leg, 42d: Fourth leg, 50: Support case, 51: Case body, 52: Guide member, 53: Pin hole, 53a: First inner circumference, 53b: Second inner circumference, 53c: Third inner circumference, 53d: Fourth inner circumference, 53i: Central inner circumference, 54a: First slope, 54b: Second slope, 54c: Third slope, 54d: Fourth slope, 55: Cylindrical portion, 60: Substrate, 61: First button, 62: Second button, 63: Third button, 64: Fourth button, 65: Central button, 70a: First slider, 70b: Second slider, 70c: Third slider, 70d: Fourth slider, 70e: Central slider

## Claims

1. A handle switch (15L) including a joystick (30) and is configured to be arranged sideward of a grip (11L) of a handlebar (10) of a straddled vehicle, wherein:
the joystick (30) includes: a stick (40) having a rod-shaped pin (41); a substrate (60) arranged so as to intersect with an axial direction of the pin (41); a first button (61), a second button (62) and a third button (63) provided on the substrate (60) and arranged in a first direction (L), a second direction (U) and a third direction (R), respectively, relative to an axis (41x) of the pin (41) as viewed from the axial direction of the pin (41); and a support case (50) that supports the stick (40) so that the stick (40) can be tilted at least in the first direction (L), the second direction (U) and the third direction (R);
the stick (40) includes: a tubular portion (42A) through which the pin (41) passes, a first leg (42a) that extends from the tubular portion (42A) in the axial direction of the pin (41) and the first direction (L); a second leg (42b) that extends from the tubular portion (42A) in the axial direction of the pin (41) and the second direction (U); and a third leg (42c) that extends from tubular portion (42A) in the axial direction of the pin (41) and the third direction (R);
the handle switch is configured so that the first leg (42a) pushes the first button (61) when the stick (40) is tilted in the first direction (L), the second leg (42b) pushes the second button (62) when the stick (40) is tilted in the second direction (U), and the third leg (42c) pushes the third button (63) when the stick (40) is tilted in the third direction (R); and **characterized in that**
the support case (50) is formed with: a pin hole (53) through which the pin (41) is inserted and that has a circumferential central inner circumference (53i); an arc-shaped first inner circumference (53a) that is concaved in the first direction (L) as viewed from the axial direction of the pin (41); an arc-shaped second inner circumference (53b) that is concaved in the second direction (U) as viewed from the axial direction of the pin (41); an arc-shaped third inner circumference (53c) that is concaved in the third direction (R) as viewed from the axial direction of the pin (41); a first slope (54a) that extends from the central inner circumference (53i) to the first inner circumference (53a) and is inclined relative to the axial direction of the pin (41); a second slope (54b) that extends from the central inner circumference (53i) to the second inner circumference (53b) and is inclined relative to the axial direction of the pin (41); and a third slope (54c) that extends from the central inner circumference (53i) to the third inner circumference (53c) and is inclined relative to the axial direction of the pin (41).

2. The handle switch (15L) according to claim 1, wherein the joystick (30) includes:
a first slider (70a) that is arranged between the first leg (42a) of the stick (40) and the first button (61) and supported on the support case (50) so that the first slider (70a) can move in the axial direction of the pin (41);
a second slider (70b) that is arranged between the second leg (42b) of the stick (40) and the second button (62) and supported on the support case (50) so that the second slider (70b) can move in the axial direction of the pin (41); and
a third slider (70c) that is arranged between the third leg (42c) of the stick (40) and the third button (63) and supported on the support case (50) so that the third slider (70c) can move in the axial direction of the pin (41).

3. The handle switch (15L) according to claim 1, wherein:
the joystick (30) includes a fourth button (64) that is provided on the substrate (60) and arranged in a fourth direction (D) relative to the axis (41x) of the pin (41) as viewed from the axial direction of the pin (41);
the support case (50) supports the stick (40) so that the stick (40) can be tilted in the fourth direction (D);
the stick (40) includes a fourth leg (42d) that extends from the tubular portion (42A) in the axial direction of the pin (41) and the fourth direction (D);
the joystick (30) is configured so that the fourth leg (42d) pushes the fourth button (64) when the stick (40) is tilted in the fourth direction (D);
the support case (50) is formed with an arc-shaped fourth inner circumference (53d) that is concaved in the fourth direction (D) as viewed from the axial direction of the pin (41), and a fourth slope (54d) that extends from the central inner circumference (53i) of the pin hole (53) to the fourth inner circumference (53d) and is tilted relative to the axial direction of the pin (41); and
as viewed from the axial direction of the pin (41), the second direction (U) is a direction that is perpendicular to the first direction (L), the third direction (R) is a direction that is opposite from the first direction (L), and the fourth direction (D) is a direction that is opposite from the second direction (U).

4. The handle switch (15L) according to claim 3, wherein the joystick (30) includes:
a first slider (70a) that is arranged between the first leg (42a) of the stick (40) and the first button (61) and supported on the support case (50) so that the first slider (70a) can move in the axial direction of the pin (41);
a second slider (70b) that is arranged between the second leg (42b) of the stick (40) and the second button (62) and supported on the support case (50) so that the second slider (70b) can move in the axial direction of the pin (41);
a third slider (70c) that is arranged between the third leg (42c) of the stick (40) and the third button (63) and supported on the support case (50) so that the third slider (70c) can move in the axial direction of the pin (41); and
a fourth slider (70d) that is arranged between the fourth leg (42d) of the stick (40) and the fourth button (64) and supported on the support case (50) so that the fourth slider (70d) can move in the axial direction of the pin (41).

5. The handle switch (15L) according to any one of claims 1 to 4, wherein:
the joystick (30) includes a central button (65) that is provided on the substrate (60) and arranged on the axis (41x) of the pin (41);
the support case (50) supports the stick (40) so that the stick (40) can move in the axial direction of the pin (41);
the joystick (30) is configured so that the pin (41) pushes the central button (65) when the stick (40) moves in the axial direction of the pin (41); and
the support case (50) includes a cylindrical portion (55) that extends in the axial direction of the pin (41) from the central inner circumference (53i) of the pin hole (53) away from the first slope (54a), the second slope (54b) and the third slope (54c).

6. The handle switch (15L) according to claim 5, wherein:
the stick (40) includes an operation button (34) that is fixed to the pin (41) and arranged on an opposite side of the tubular portion (42A) from the first leg (42a), the second leg (42b) and the third leg (42c);
a circumferential groove (34a) is formed around the pin (41) of the operation button (34); and
the operation button (34) and the tubular portion (42A) are engaged with each other so that the tubular portion (42A) can move in the axial direction of the pin (41) in the groove (34a).

7. The handle switch (15L) according to any one of claims 1 to 6, wherein:
the support case (50) includes a case body (51) that supports the stick (40) so that the stick (40) can be tilted at least in the first direction (L), the second direction (U) and the third direction (R), and a guide member (52) that is formed separately from the case body (51) and assembled onto the case body (51); and
the guide member (52) is formed with the pin hole (53), the central inner circumference (53i), the first inner circumference (53a), the second inner circumference (53b), the third inner circumference (53c), the first slope (54a), the second slope (54b) and the third slope (54c).

8. The handle switch (15L) according to claim 7, wherein:
the case body (51) is formed of resin; and
the pin (41) and the guide member (52) are formed of metal.

9. The handle switch (15L) according to any one of claims 1 to 8, wherein:
the pin (41) includes a first end portion (41a) and a second end portion (41b) that is located closer to the substrate (60) than the first end portion (41a); and
the pin (41) is inclined relative to a plane (P1) perpendicular to an axis (11Lc) of the grip (11L) so that the first end portion (41a) is located closer to the grip (11L) than the second end portion (41b).

10. The handle switch (15L) according to any one of claims 1 to 9, comprising a button (24) that is arranged closer to the grip (11L) than the stick (40).

11. The handle switch (15L) according to any one of claims 1 to 10, wherein handle switch (15L) comprises handle switch case (20) made of a first half and a second half, a the stick (40) is provided on the second half of the handle switch (15L), and preferably the second half is a lower half of the handle switch (15L) when the of the handle switch (15L) is arranged sideward of the grip (11L) the handlebar (10) of a straddled vehicle.

12. The handle switch (15L) according to any one of claims 1 to 11, comprising:
a turn switch (23) configured for operating a direction indicator; and
a horn button (22) configured for operating a horn,
wherein an outer end (30t) of the joystick (30) in a first direction is located further of the turn switch (23) and the horn button (22) in the first direction, preferably when the of the handle switch (15L) is arranged sideward of the grip (11L) of the handlebar (10) of a straddled vehicle the first direction is a radial direction of the grip (11L) so that the outer end (30t) of the joystick (30) in the radial direction of the grip (11L) is located outward of the turn switch (23) and the horn button (22) in the radial direction of the grip (11L).

13. A straddled vehicle (1) comprising a handle switch (15L) according to any one of claims 1 to 12.

14. The straddled (1) vehicle according to claim 13, comprising:
an accelerator grip (11R) that can be turned and is arranged at a right end portion of the handlebar (10), wherein:
the grip (11L) is a fixed grip that cannot be turned and is arranged at a left end portion of the handlebar (10); and
the handle switch (15L) is arranged rightward of the fixed grip.

## Patentansprüche

1. Ein Lenkerschalter (15L), der einen Joystick (30) enthält und konfiguriert ist, um seitlich von einem Griff (11L) einer Lenkstange (10) eines Spreiz-Sitz-Fahrzeugs angeordnet zu werden, wobei:
der Joystick (30) enthält: einen Knüppel (40) mit einem stabförmigen Stift (41); ein Substrat (60), das angeordnet ist, so dass es eine axiale Richtung des Stifts (41) schneidet; eine erste Taste (61), eine zweite Taste (62) und eine dritte Taste (63), die auf dem Substrat (60) vorgesehen und jeweils in einer ersten Richtung (L), einer zweiten Richtung (U) und einer dritten Richtung (R) relativ zu einer Achse (41x) des Stifts (41), von der axialen Richtung des Stifts (41) aus gesehen, angeordnet sind; und ein Lagergehäuse (50), das den Knüppel (40) lagert, so dass der Knüppel (40) zumindest in der ersten Richtung (L), der zweiten Richtung (U) und der dritten Richtung (R) gekippt werden kann;
der Knüppel (40) enthält: einen rohrförmigen Abschnitt (42A), durch den der Stift (41) verläuft, einen ersten Schenkel (42a), der sich von dem rohrförmigen Abschnitt (42A) in der axialen Richtung des Stifts (41) und der ersten Richtung (L) erstreckt; einen zweiten Schenkel (42b), der sich von dem rohrförmigen Abschnitt (42A) in der axialen Richtung des Stifts (41) und der zweiten Richtung (U) erstreckt; und einen dritten Schenkel (42c), der sich von dem rohrförmigen Abschnitt (42A) in der axialen Richtung des Stifts (41) und der dritten Richtung (R) erstreckt;
der Lenkerschalter konfiguriert ist, so dass der erste Schenkel (42a) die erste Taste (61) drückt, wenn der Knüppel (40) in die erste Richtung (L) geneigt wird, der zweite Schenkel (42b) die zweite Taste (62) drückt, wenn der Knüppel (40) in die zweite Richtung (U) geneigt wird, und der dritte Schenkel (42c) die dritte Taste (63) drückt, wenn der Knüppel (40) in die dritte Richtung (R) geneigt wird; und **dadurch gekennzeichnet, dass**
das Lagergehäuse (50) ausgebildet ist mit: einem Stiftloch (53), durch das der Stift (41) eingesetzt ist und das einen umlaufenden zentralen Innenumfang (53i) hat; einem bogenförmigen ersten Innenumfang (53a), der in der ersten Richtung (L), von der axialen Richtung des Stifts (41) aus gesehen, konkav ist; einen bogenförmigen zweiten Innenumfang (53b), der in der zweiten Richtung (U) konkav ist, gesehen von der axialen Richtung des Stifts (41); einen bogenförmigen dritten Innenumfang (53c), der in der dritten Richtung (R) konkav ist, gesehen von der axialen Richtung des Stifts (41); eine erste Schräge (54a), die sich von dem zentralen Innenumfang (53i) zu dem ersten Innenumfang (53a) erstreckt und relativ zu der axialen Richtung des Stifts (41) geneigt ist; eine zweite Schräge (54b), die sich von dem zentralen Innenumfang (53i) zu dem zweiten Innenumfang (53b) erstreckt und relativ zu der axialen Richtung des Stifts (41) geneigt ist und eine dritte Schräge (54c), die sich von dem zentralen Innenumfang (53i) zu dem dritten Innenumfang (53c) erstreckt und relativ zu der axialen Richtung des Stifts (41) geneigt ist.

2. Der Lenkerschalter (15L) gemäß Anspruch 1, wobei der Joystick (30) enthält:
einen ersten Gleiter (70a), der zwischen dem ersten Schenkel (42a) des Knüppels (40) und der ersten Taste (61) angeordnet ist und auf dem Lagergehäuse (50) gelagert ist, so dass sich der erste Gleiter (70a) in der axialen Richtung des Stifts (41) bewegen kann;
einen zweiten Gleiter (70b), der zwischen dem zweiten Schenkel (42b) des Knüppels (40) und der zweiten Taste (62) angeordnet und auf dem Lagergehäuse (50) gelagert ist, so dass sich der zweite Gleiter (70b) in der axialen Richtung des Stifts (41) bewegen kann; und
einen dritten Gleiter (70c), der zwischen dem dritten Schenkel (42c) des Knüppels (40) und der dritten Taste (63) angeordnet ist und auf dem Lagergehäuse (50) gelagert ist, so dass sich der dritte Gleiter (70c) in der axialen Richtung des Stifts (41) bewegen kann.

3. Der Lenkerschalter (15L) gemäß Anspruch 1, wobei:
der Joystick (30) eine vierte Taste (64) enthält, die auf dem Substrat (60) vorgesehen und in einer vierten Richtung (D) relativ zur Achse (41x) des Stifts (41), von der axialen Richtung des Stifts (41) aus gesehen, angeordnet ist;
das Lagergehäuse (50) lagert den Knüppel (40), so dass der Knüppel (40) in die vierte Richtung (D) gekippt werden kann;
der Knüppel (40) einen vierten Schenkel (42d) enthält, der sich von dem rohrförmigen Abschnitt (42A) in der axialen Richtung des Stifts (41) und der vierten Richtung (D) erstreckt;
der Joystick (30) konfiguriert ist, so dass der vierte Schenkel (42d) die vierte Taste (64) drückt, wenn der Knüppel (40) in die vierte Richtung (D) gekippt wird;
das Lagergehäuse (50) mit einem bogenförmigen vierten Innenumfang (53d) ausgebildet ist, der in der vierten Richtung (D), von der axialen Richtung des Stifts (41) aus gesehen, konkav ist, und eine vierte Schräge (54d) aufweist, die sich von dem zentralen Innenumfang (53i) des Stiftlochs (53) zu dem vierten Innenumfang (53d) erstreckt und relativ zu der axialen Richtung des Stifts (41) geneigt ist; und
von der axialen Richtung des Stifts (41) aus gesehen ist die zweite Richtung (U) eine Richtung, die senkrecht zur ersten Richtung (L) ist, die dritte Richtung (R) ist eine Richtung, die der ersten Richtung (L) entgegengesetzt ist, und die vierte Richtung (D) ist eine Richtung, die der zweiten Richtung (U) entgegengesetzt ist.

4. Der Lenkerschalter (15L) gemäß Anspruch 3, wobei der Joystick (30) enthält:
einen ersten Gleiter (70a), der zwischen dem ersten Schenkel (42a) des Stifts (40) und der ersten Taste (61) angeordnet ist und auf dem Lagergehäuse (50) gelagert ist, so dass sich der erste Gleiter (70a) in der axialen Richtung des Stifts (41) bewegen kann;
einen zweiten Gleiter (70b), der zwischen dem zweiten Schenkel (42b) des Knüppels (40) und der zweiten Taste (62) angeordnet ist und auf dem Lagergehäuse (50) gelagert ist, so dass sich der zweite Gleiter (70b) in der axialen Richtung des Stifts (41) bewegen kann;
einen dritten Gleiter (70c), der zwischen dem dritten Schenkel (42c) des Knüppels (40) und der dritten Taste (63) angeordnet ist und auf dem Lagergehäuse (50) gelagert ist, so dass sich der dritte Gleiter (70c) in der axialen Richtung des Stifts (41) bewegen kann; und
einen vierten Gleiter (70d), der zwischen dem vierten Schenkel (42d) des Knüppels (40) und der vierten Taste (64) angeordnet ist und auf dem Lagergehäuse (50) gelagert ist, so dass sich der vierte Gleiter (70d) in der axialen Richtung des Stifts (41) bewegen kann.

5. Der Lenkerschalter (15L) gemäß irgendeinem der Ansprüche 1 bis 4, wobei:
der Joystick (30) eine zentrale Taste (65) enthält, die auf dem Substrat (60) vorgesehen ist, und auf der Achse (41x) des Stifts (41) angeordnet ist;
das Lagergehäuse (50) lagert den Knüppel (40), so dass sich der Knüppel (40) in der axialen Richtung des Stifts (41) bewegen kann;
der Joystick (30) konfiguriert ist, so dass der Stift (41) die zentrale Taste (65) drückt, wenn sich der Knüppel (40) in der axialen Richtung des Stifts (41) bewegt; und
das Lagergehäuse (50) einen zylindrischen Abschnitt (55) enthält, der sich in der axialen Richtung des Stifts (41) vom zentralen Innenumfang (53i) des Stiftlochs (53) weg von der ersten Schräge (54a), der zweiten Schräge (54b) und der dritten Schräge (54c) erstreckt.

6. Der Lenkerschalter (15L) gemäß Anspruch 5, wobei:
der Knüppel (40) eine Betätigungstaste (34) enthält, die an dem Stift (41) befestigt ist und auf einer dem ersten Schenkel (42a), dem zweiten Schenkel (42b) und dem dritten Schenkel (42c) gegenüberliegenden Seite des rohrförmigen Abschnitts (42A) angeordnet ist;
eine Umfangsnut (34a) um den Stift (41) der Betätigungstaste (34) herum ausgebildet ist; und
die Betätigungstaste (34) und der rohrförmige Abschnitt (42A) miteinander in Eingriff stehen, so dass sich der rohrförmige Abschnitt (42A) in der axialen Richtung des Stifts (41) in der Nut (34a) bewegen kann.

7. Der Lenkerschalter (15L) gemäß irgendeinem der Ansprüche 1 bis 6, wobei:
das Lagergehäuse (50) einen Gehäusekörper (51), der den Knüppel (40) lagert, so dass der Knüppel (40) zumindest in der ersten Richtung (L), der zweiten Richtung (U) und der dritten Richtung (R) gekippt werden kann, und ein Führungselement (52), das separat von dem Gehäusekörper (51) ausgebildet und an dem Gehäusekörper (51) montiert ist, enthält; und
das Führungselement (52) mit dem Stiftloch (53), dem zentralen Innenumfang (53i), dem ersten Innenumfang (53a), dem zweiten Innenumfang (53b), dem dritten Innenumfang (53c), der ersten Schräge (54a), der zweiten Schräge (54b) und der dritten Schräge (54c) ausgebildet ist.

8. Der Lenkerschalter (15L) gemäß Anspruch 7, wobei:
der Gehäusekörper (51) aus Harz gebildet ist; und
der Stift (41) und das Führungselement (52) aus Metall gebildet sind.

9. Der Lenkerschalter (15L) gemäß irgendeinem der Ansprüche 1 bis 8, wobei:
der Stift (41) einen ersten Endabschnitt (41a) und einen zweiten Endabschnitt (41b)
enthält, der näher an dem Substrat (60) angeordnet ist als der erste Endabschnitt (41a); und
der Stift (41) relativ zu einer Ebene (P1) senkrecht zu einer Achse (11Lc) des Griffs (11L) geneigt ist, so dass der erste Endabschnitt (41a) näher am Griff (11L) angeordnet ist als der zweite Endabschnitt (41b).

10. Der Lenkerschalter (15L) gemäß irgendeinem der Ansprüche 1 bis 9, der eine Taste (24) aufweist, die näher am Griff (11L) angeordnet ist als der Knüppel (40).

11. Der Lenkerschalter (15L) gemäß irgendeinem der Ansprüche 1 bis 10, wobei der Lenkerschalter (15L) ein Lenkerschaltergehäuse (20) aufweist, das aus einer ersten Hälfte und einer zweiten Hälfte gemacht ist, der Knüppel (40) an der zweiten Hälfte des Lenkerschalters (15L) vorgesehen ist, und die zweite Hälfte vorzugsweise eine untere Hälfte des Lenkerschalters (15L) ist, wenn der Lenkerschalter (15L) seitlich vom Griff (11L) der Lenkstange (10) eines Spreiz-Sitz-Fahrzeugs angeordnet ist.

12. Der Lenkerschalter (15L) gemäß irgendeinem der Ansprüche 1 bis 11, umfassend:
einen Drehschalter (23), der zur Betätigung eines Fahrtrichtungsanzeigers konfiguriert ist; und
eine Hupentaste (22), die für die Betätigung einer Hupe konfiguriert ist,
wobei ein äußeres Ende (30t) des Joysticks (30) in einer ersten Richtung weiter als der Drehschalter (23) und der Hupenknopf (22) angeordnet ist, vorzugsweise wenn der Lenkerschalter (15L) seitlich des Griffs (11L) der Lenkstange (10) eines Spreiz-Sitz-Fahrzeugs angeordnet ist, ist die erste Richtung eine radiale Richtung des Griffs (11L), so dass das äußere Ende (30t) des Joysticks (30) in der radialen Richtung des Griffs (11L) außerhalb des Drehschalters (23) und der Hupentaste (22) in der radialen Richtung des Griffs (11L) angeordnet ist.

13. Ein Spreiz-Sitz-Fahrzeug (1) mit einem Lenkerschalter (15L) gemäß irgendeinem der Ansprüche 1 bis 12.

14. Das Spreiz-Sitz-Fahrzeug (1) gemäß Anspruch 13, umfassend:
einen Gasgriff (11R), der gedreht werden kann und an einem rechten Endabschnitt der Lenkstange (10) angeordnet ist, wobei:
der Griff (11L) ein fester, nicht drehbarer Griff ist, der an einem linken Endabschnitt der Lenkstange (10) angeordnet ist; und
der Lenkerschalter (15L) ist rechts vom festen Griff angeordnet.

## Revendications

1. Commutateur de poignée (15L) comprenant une manette (30) et configuré pour être agencé latéralement sur une poignée (11L) d'un guidon (10) d'un véhicule à enfourcher, dans lequel :
la manette (30) comprend : un manche (40) comportant un goujon en forme de tige (41) ; un substrat (60) agencé de manière à intersecter une direction axiale du goujon (41) ; un premier bouton (61), un deuxième bouton (62) et un troisième bouton (63) pourvus sur le substrat (60) et agencés respectivement dans une première direction (L), une deuxième direction (U) et une troisième direction (R) par rapport à un axe (41x) du goujon (41) vu depuis la direction axiale du goujon (41) ; et un boîtier de support (50) qui supporte le manche (40) de telle sorte que le manche (40) peut être incliné au moins dans la première direction (L), dans la deuxième direction (U) et dans la troisième direction (R) ;
le manche (40) comprend : une portion tubulaire (42A) à travers laquelle passe le goujon (41), une première patte (42a) qui s'étend depuis la portion tubulaire (42A) dans la direction axiale du goujon (41) et dans la première direction (L) ; une deuxième patte (42b) qui s'étend depuis la portion tubulaire (42A) dans la direction axiale du goujon (41) et dans la deuxième direction (U) ; et une troisième patte (42c) qui s'étend depuis la portion tubulaire (42A) dans la direction axiale du goujon (41) et dans la troisième direction (R) ;
le commutateur de poignée est configuré de telle sorte que la première patte (42a) appuie sur le premier bouton (61) quand le manche (40) est incliné dans la première direction (L), la deuxième patte (42b) appuie sur le deuxième bouton (62) quand le manche (40) est incliné dans la deuxième direction (U), et la troisième patte (42c) appuie sur le troisième bouton (63) quand le manche (40) est incliné dans la troisième direction (R) ; et
**caractérisé en ce que** le boîtier de support (50) est conformé avec : un trou de goujon (53) à travers lequel le goujon (41) est inséré et qui présente une circonférence interne centrale circonférentielle (53i) ; une première circonférence interne en forme d'arc (53a) qui est concave dans la première direction (L) vu depuis la direction axiale du goujon (41) ; une deuxième circonférence interne en forme d'arc (53b) qui est concave dans la deuxième direction (U) vu depuis la direction axiale du goujon (41) ; une troisième circonférence interne en forme d'arc (53c) qui est concave dans la troisième direction (R) vu depuis la direction axiale du goujon (41) ; une première surface inclinée (54a) qui s'étend depuis la circonférence interne centrale (53i) jusqu'à la première circonférence interne (53a) et est inclinée par rapport à la direction axiale du goujon (41) ; une deuxième surface inclinée (54b) qui s'étend depuis la circonférence interne centrale (53i) jusqu'à la deuxième circonférence interne (53b) et est inclinée par rapport à la direction axiale du goujon (41) ; et une troisième surface inclinée (54c) qui s'étend depuis la circonférence interne centrale (53i) jusqu'à la troisième circonférence interne (53c) et est inclinée par rapport à la direction axiale du goujon (41).

2. Commutateur de poignée (15L) selon la revendication 1, dans lequel la manette (30) comprend :
un premier coulisseau (70a) qui est agencé entre la première patte (42a) du manche (40) et le premier bouton (61), et supporté sur le boîtier de support (50) de telle sorte que le premier coulisseau (70a) peut se déplacer dans la direction axiale du goujon (41) ;
un deuxième coulisseau (70b) qui est agencé entre la deuxième patte (42b) du manche (40) et le deuxième bouton (62), et supporté sur le boîtier de support (50) de telle sorte que le deuxième coulisseau (70b) peut se déplacer dans la direction axiale du goujon (41) ; et
un troisième coulisseau (70c) qui est agencé entre la troisième patte (42c) du manche (40) et le troisième bouton (63), et supporté sur le boîtier de support (50) de telle sorte que le troisième coulisseau (70c) peut se déplacer dans la direction axiale du goujon (41).

3. Commutateur de poignée (15L) selon la revendication 1, dans lequel :
la manette (30) comprend un quatrième bouton (64) qui est pourvu sur le substrat (60) et agencé dans une quatrième direction (D) par rapport à l'axe (41x) du goujon (41) vu depuis la direction axiale du goujon (41) ;
le boîtier de support (50) supporte le manche (40) de telle sorte que le manche (40) peut être incliné dans la quatrième direction (D) ;
le manche (40) comprend une quatrième patte (42d) qui s'étend depuis la portion tubulaire (42A) dans la direction axiale du goujon (41) et dans la quatrième direction (D) ;
la manette (30) est configurée de telle sorte que la quatrième patte (42d) appuie sur le quatrième bouton (64) quand le manche (40) est incliné dans la quatrième direction (D) ;
le boîtier de support (50) est formé avec une quatrième circonférence interne en forme d'arc (53d) qui est concave dans la quatrième direction (D) vu depuis la direction axiale du goujon (41), et une quatrième surface inclinée (54d) qui s'étend depuis la circonférence interne centrale (53i) du trou de goujon (53) jusqu'à la quatrième circonférence interne (53d) et est inclinée par rapport à la direction axiale du goujon (41) ; et
vu depuis la direction axiale du goujon (41), la deuxième direction (U) est une direction perpendiculaire à la première direction (L), la troisième direction (R) est une direction opposée à la première direction (L), et la quatrième direction (D) est une direction opposée à la deuxième direction (U).

4. Commutateur de poignée (15L) selon la revendication 3, dans lequel la manette (30) comprend :
un premier coulisseau (70a) qui est agencé entre la première patte (42a) du manche (40) et le premier bouton (61), et supporté sur le boîtier de support (50) de telle sorte que le premier coulisseau (70a) peut se déplacer dans la direction axiale du goujon (41) ;
un deuxième coulisseau (70b) qui est agencé entre la deuxième patte (42b) du manche (40) et le deuxième bouton (62), et supporté sur le boîtier de support (50) de telle sorte que le deuxième coulisseau (70b) peut se déplacer dans la direction axiale du goujon (41) ;
un troisième coulisseau (70c) qui est agencé entre la troisième patte (42c) du manche (40) et le troisième bouton (63), et supporté sur le boîtier de support (50) de telle sorte que le troisième coulisseau (70c) peut se déplacer dans la direction axiale du goujon (41) ; et
un quatrième coulisseau (70d) qui est agencé entre la quatrième patte (42d) du manche (40) et le quatrième bouton (64), et supporté sur le boîtier de support (50) de telle sorte que le quatrième coulisseau (70d) peut se déplacer dans la direction axiale du goujon (41).

5. Commutateur de poignée (15L) selon l'une quelconque des revendications 1 à 4, dans lequel :
la manette (30) comprend un bouton central (65) qui est pourvu sur le substrat (60) et agencé sur l'axe (41x) du goujon (41) ;
le boîtier de support (50) supporte le manche (40) de telle sorte que le manche (40) peut se déplacer dans la direction axiale du goujon (41) ;
la manette (30) est configurée de telle sorte que le goujon (41) appuie sur le bouton central (65) quand le manche (40) se déplace dans la direction axiale du goujon (41) ; et
le boîtier de support (50) comprend une portion cylindrique (55) qui s'étend dans la direction axiale du goujon (41) depuis la circonférence interne centrale (53i) du trou de goujon (53) en s'éloignant de la première surface inclinée (54a), de la deuxième surface inclinée (54b) et de la troisième surface inclinée (54c).

6. Commutateur de poignée (15L) selon la revendication 5, dans lequel :
le manche (40) comprend un bouton d'actionnement (34) qui est fixé au goujon (41) et agencé sur un côté opposé de la portion tubulaire (42A) par rapport à la première patte (42a), à la deuxième patte (42b) et à la troisième patte (42c) ;
une rainure circonférentielle (34a) est formée autour du goujon (41) du bouton d'actionnement (34) ; et
le bouton d'actionnement (34) et la portion tubulaire (42A) sont engagés l'un avec l'autre de telle sorte que la portion tubulaire (42A) peut se déplacer dans la direction axiale du goujon (41) dans la rainure (34a).

7. Commutateur de poignée (15L) selon l'une quelconque des revendications 1 à 6, dans lequel :
le boîtier de support (50) comprend un corps de boîtier (51) qui supporte le manche (40) de telle sorte que le manche (40) peut être incliné au moins dans la première direction (L), dans la deuxième direction (U) et dans la troisième direction (R), et un élément de guidage (52) qui est formé séparément du corps de boîtier (51) et assemblé sur le corps de boîtier (51) ; et
l'élément de guidage (52) est formé avec le trou de goujon (53), la circonférence interne centrale (53i), la première circonférence interne (53a), la deuxième circonférence interne (53b), la troisième circonférence interne (53c), la première surface inclinée (54a), la deuxième surface inclinée (54b) et la troisième surface inclinée (54c).

8. Commutateur de poignée (15L) selon la revendication 7, dans lequel :
le corps de boîtier (51) est constitué de résine ; et
le goujon (41) et l'élément de guidage (52) sont constitués de métal.

9. Commutateur de poignée (15L) selon l'une quelconque des revendications 1 à 8, dans lequel :
le goujon (41) comprend une première portion d'extrémité (41a) et une deuxième portion d'extrémité (41b) située plus près du substrat (60) que la première portion d'extrémité (41a) ; et
le goujon (41) est incliné par rapport à un plan (P1) perpendiculaire à un axe (11Lc) de la poignée (11L) de telle sorte que la première portion d'extrémité (41a) est située plus près de la poignée (11L) que la deuxième portion d'extrémité (41b).

10. Commutateur de poignée (15L) selon l'une quelconque des revendications 1 à 9, comprenant un bouton (24) qui est agencé plus près de la poignée (11L) que du manche (40).

11. Commutateur de poignée (15L) selon l'une quelconque des revendications 1 à 10, dans lequel le commutateur de poignée (15L) comprend un boîtier de commutateur de poignée (20) constitué d'une première moitié et d'une deuxième moitié, le manche (40) est pourvu sur la deuxième moitié du commutateur de poignée (15L), et de préférence la deuxième moitié est une moitié inférieure du commutateur de poignée (15L) quand le commutateur de poignée (15L) est agencé latéralement par rapport à la poignée (11L) du guidon (10) d'un véhicule à enfourcher.

12. Commutateur de poignée (15L) selon l'une quelconque des revendications 1 à 11, comprenant :
un commutateur de feux clignotants (23) configuré pour actionner un indicateur de direction ; et
un bouton d'avertisseur sonore (22) configuré pour actionner un avertisseur sonore,
dans lequel une extrémité externe (30t) de la manette (30) dans une première direction est située plus loin du commutateur de feux clignotants (23) et du bouton d'avertisseur sonore (22) dans la première direction, et de préférence, quand le commutateur de poignée (15L) est agencé latéralement par rapport à la poignée (11L) du guidon (10) d'un véhicule à enfourcher, la première direction est une direction radiale de la poignée (11L) de telle sorte que l'extrémité externe (30t) de la manette (30) dans la direction radiale de la poignée (11L) est située à l'extérieur du commutateur de feux clignotants (23) et du bouton d'avertisseur sonore (22) dans la direction radiale de la poignée (11L).

13. Véhicule à enfourcher (1) comprenant un commutateur de poignée (15L) selon l'une quelconque des revendications 1 à 12.

14. Véhicule à enfourcher (1) selon la revendication 13, comprenant :
une poignée d'accélérateur (11R) rotative qui est agencée à une portion d'extrémité droite du guidon (10), dans lequel :
la poignée (11L) est une poignée fixe non rotative qui est agencée sur une portion d'extrémité gauche du guidon (10) ; et
le commutateur de poignée (15L) est agencé à droite de la poignée fixe.
